# EUROPÄISCHE PATENTSCHRIFT

(11) **EP 0 428 040 B1**
(45) Veröffentlichungstag und Bekanntmachung des Hinweises auf die Patenterteilung: **15.05.1996**
(21) Anmeldenummer: 90121192.0
(22) Anmeldetag: 06.11.1990
(51) Int. Cl.: G01N 21/07, B04B 5/04

(54) **Küvettenrotor**
Cuvette rotor
Rotor à cuvettes

(30) Priorität: 11.11.1989 DE 3937609
(43) Veröffentlichungstag der Anmeldung: 22.05.1991
(73) Patentinhaber: BEHRINGWERKE Aktiengesellschaft, 35001 Marburg (DE)
(72) Erfinder: Hissung, Alfred René, Dr., W-3550 Marburg (DE)
(74) Vertreter: Kachholz, Traudel

(56) Entgegenhaltungen:
- EP-A- 0 052 770
- EP-A- 0 163 063
- US-A- 3 873 217
- US-A- 4 373 812

## Beschreibung

Die Erfindung betrifft einen Küvettenrotor mit einzelnen radial angeordneten Küvetten, wie er in automatisch arbeitenden Zentrifugenanalysensystemen zur Untersuchung von biologischen Flüssigkeiten, wie z.B. Blut, Blutplasma oder Blutserum eingesetzt werden kann.

Die biologischen Flüssigkeiten werden vor der Analyse gegebenenfalls zentrifugiert und für das Feststellen bestimmter Eigenschaften oder Inhaltsstoffe mit spezifischen Reagenzien, wie sie z.B. für PT, aPTT, Fibrinogen Faktor II bis XII-Tests benötigt werden vermischt und das Reaktionsergebnis optisch erfaßt.

Ein Küvettenrotor für solche Analysen ist nach europäischer Patentanmeldung 0 163 038 bekannt. Die einzelnen, kreisförmig angeordneten Küvetten erstrecken sich radial und sind allseitig geschlossen. Sie weisen jeweils zwei Kammern auf, die durch einen Damm voneinander getrennt und mit einer Öffnung zum Füllen versehen sind. In der einen Kammer wird biologische Flüssigkeit und in der anderen Kammer spezifisches Reagenz vorgelegt, das sich mit der biologischen Flüssigkeit mischt und reagiert, sobald durch die Wirkung der Zentrifugalkräfte die beiden Flüssigkeiten in die peripher angeordnete Kammer gelangen. Die optische Messung erfolgt senkrecht zur Rotorebene durch die peripher angeordnete Kammer bei fester Schichtdicke der zu analysierenden Flüssigkeit.

Der Erfindung liegt die Aufgabe zugrunde, einen Küvettenrotor der genannten Art zu schaffen, auf dem weitere von den einzelnen Küvetten unabhängige Gefäße zum Zentrifugieren von Proben angeordnet sind.

Die Aufgabe wird durch einen Küvettenrotor gelöst, der dadurch gekennzeichnet ist, daß zwischen den einzelnen Küvetten allseitig geschlossene Gefäße angeordnet sind, deren Unterteil für jedes Gefäß einen Damm aufweist, der das Gefäß in zwei Kammern teilt und deren Oberteil im Bereich der axial angeordneten Kammern mit Öffnungen und im Bereich der peripher angeordneten Kammern mit Abweisern versehen ist, die an die sich in radiale Richtung des Rotors erstreckenden seitlichen Wände der Gefäße grenzen und die in die peripher angeordneten Kammern hineinragen.

Die Dämme können ansteigende und abfallende Flächen aufweisen, die sich in radialer Richtung des Rotors erstrecken, wobei die ansteigenden Flächen weniger steil sind als die abfallenden Flächen.

Der Vorteil der Erfindung ist in erster Linie darin zu sehen, daß zusätzliche Trenngefäße zum Zentrifugieren von Proben raumsparend zwischen den Küvetten angeordnet sind, wodurch die Anwendungsmöglichkeiten des Küvettenrotors beträchtlich erweitert werden.

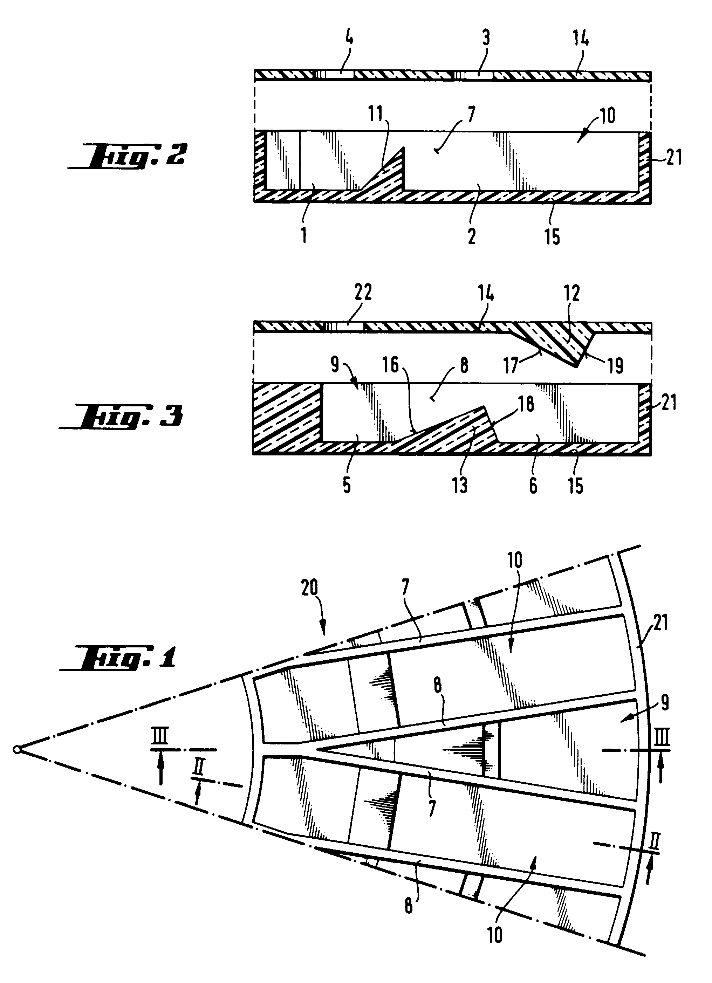

Im folgenden wird der Küvettenrotor anhand von lediglich einen Ausführungsweg darstellenden Zeichnungen näher erläutert. Es zeigt
- Figur 1: einen Ausschnitt des Küvettenrotors von oben ohne Oberteil,
- Figur 2: den Schnitt II-II von Figur 1 mit Oberteil,
- Figur 3: den Schnitt III-III von Figur 1 mit Oberteil.

Der Küvettenrotor (20) besteht aus allseitig geschlossenen Küvetten (10), die von seitlichen Wänden (7,8), einem Oberteil (14), einem Unterteil (15) und einer Stirnwand (21) begrenzt sind. Die einzelnen Küvetten (10) weisen Kammern (1) und (2) auf, die durch einen Damm (11) voneinander getrennt sind. Der Damm (11) ist auf dem Unterteil (15) angeordnet. Der Damm (11) ist so gestaltet, daß bei dem geforderten Kammervolumen und bei stehendem Rotor ein Überlauf in die Nachbarkammer nicht stattfinden kann. Das Oberteil (14) ist mit Öffnungen (3 und 4) versehen, über die der Innenraum der Kammern (1 und 2) zugänglich ist.

Die Zwischenräume zwischen den einzelnen Küvetten (10) sind als geschlossene Gefäße (9) zum Zentrifugieren von Proben ausgebildet. Die Gefäße (9) werden von den seitlichen Wänden (7 und 8), dem Oberteil (14), dem Unterteil (15) und der Stirnwand (21) begrenzt. Die Gefäße (9) werden durch Dämme (13), die auf dem Unterteil (15) angeordnet sind, in die Kammern (5 und 6) unterteilt. Der Innenraum der Gefäße ist über Öffnungen (22) zugänglich, die im Oberteil und zwar über der drehachsennahen Kammer (5) angeordnet sind. In die peripher angeordneten Kammern (6) ragen vom Oberteil (14) ausgehende Abweiser (12). Die Dämme (13) und die Abweiser (12) grenzen seitlich an die Wände (7 und 8) und weisen ansteigende und abfallende ebene oder gekrümmte Flächen (16, 17, 18 und 19) auf, die sich in radialer Richtung des Rotors (20) erstrecken. Die ansteigenden Flächen (16 und 17) sind weniger steil als die abfallenden Flächen (18 und 19).

Beim Zentrifugieren bewegen sich die in der Probe vorhandenen festen Bestandteile radial in Richtung Stirnwand (21) des Gefäßes (9). Am Ende des Zentrifugiervorganges und vor dem Abbremsen der Rotationsbewegung des Küvettenrotors befinden sich alle festen Bestandteile der Probe in der peripheren Kammer (6) und zwar zwischen Stirnwand (21) und dem am Oberteil (14) angebrachten Abweiser (12), d.h. die Trennfläche zwischen festen Bestandteilen und der Flüssigkeit befindet sich senkrecht hinter dem Abweiser (12) in der peripheren Kammer (6). Beim Abbremsen der Rotationsbewegung sorgt der Abweiser (12) dafür, daß die festen Bestandteile in der peripheren Kammer (6) hinter dem Damm (13) verbleiben. Ein Teil der Flüssigkeit fließt ohne feste Bestandteile über den Damm (13) in die achsennahe Kammer (5) zurück, wo sie anschließend mit Hilfe einer Kanüle oder Pipettenspitze durch Öffnung (22) im Oberteil (14) entnommen und gegebenenfalls in die Küvette (10) transferiert werden kann.

## Patentansprüche

1. Küvettenrotor mit kreisförmig angeordneten und sich radial erstreckenden, einzelnen, allseitig geschlossenen Küvetten, die je zwei Kammern aufweisen, die durch einen Damm voneinander getrennt sind, wobei jede Kammer eine Öffnung zum Füllen aufweist, dadurch gekennzeichnet, daß zwischen den einzelnen Küvetten (10) allseitig geschlossene Gefäße (9) angeordnet sind, deren Unterteil (15) für jedes Gefäß einen Damm (13) aufweist, der das Gefäß in zwei Kammern (5,6) teilt und deren Oberteil (14) im Bereich der drehachsennah angeordneten Kammern (5) mit Öffnungen (22) und im Bereich der peripher angeordneten Kammern (6) mit Abweisern (12) versehen ist, die an die sich in radiale Richtung des Rotors erstreckenden seitlichen Wände (7,8) der Gefäße (9) grenzen und die in die peripher angeordneten Kammern (6) hineinragen.

2. Küvettenrotor nach Anspruch 1, dadurch gekennzeichnet, daß die Dämme (13) und die Abweiser (12) ansteigende und abfallende Flächen (16, 17 , 18, 19) aufweisen, die sich in radialer Richtung des Rotors erstrecken, wobei die ansteigenden Flächen (16, 17) weniger steil sind als die abfallenden Flächen (18, 19).

## Claims

1. A cuvette rotor having circularly arranged and radially extending, individual cuvettes which are closed on all sides and each have two chambers which are separated from one another by a barrier, each chamber having an orifice for filling, wherein vessels (9) which are closed on all sides are arranged between the individual cuvettes (10), the bottom part (15) of each vessel having a barrier (13) which divides the vessel into two chambers (5, 6), and the upper part (14) thereof being provided with orifices (22) in the area of the chambers (5) arranged close to the axis of rotation and with guards (12) which adjoin the lateral walls (7, 8) of the vessels (9) extending in the radial direction of the rotor and protrude into the peripherally arranged chambers (6), in the area of the peripherally arranged chambers (6).

2. The cuvette rotor as claimed in claim 1, wherein the barriers (13) and the guards (12) have rising and falling surfaces (16, 17, 18, 19) which extend in the radial direction of the rotor, the rising surfaces (16, 17) being less steep than the falling surfaces (18, 19).

## Revendications

1. Rotor à cuvettes comportant des cuvettes individuelles, disposées selon une disposition circulaire et s'étendant radialement et qui sont fermées de tous côtés et comportent chacune deux chambres, qui sont séparées l'une de l'autre par une nervure, chaque chambre comportant une ouverture pour le remplissage, caractérisé en ce qu'entre les différentes cuvettes (10) sont disposés des récipients (9) fermés de tous côtés, dont la partie inférieure (15) possède, pour chaque récipient, une nervure (13), qui divise le récipient en deux chambres (5,6), et dont la partie supérieure (14) comporte, dans la zone des chambres (5) disposées à proximité de l'axe de rotation, des ouvertures (22) et, dans la zone des chambres (6) disposées sur la périphérie, des déflecteurs (12), qui sont contigus aux parois latérales (7, 8) des récipients (9), qui s'étendent dans la direction radiale du rotor et pénètrent dans les chambres (6) disposées sur la périphérie.

2. Rotor à cuvette selon la revendication 1, caractérisé en ce que les nervures (13) et les déflecteurs (12) possèdent des surfaces montantes et descendantes (16, 17,18,19), qui s'étendent dans la direction radiale du rotor, les surfaces montantes (16,17) étant moins pentues que les surfaces descendantes (18,19).
